# EUROPEAN PATENT APPLICATION

(11) **EP 3 726 774 A1**
(43) Date of publication of application: **21.10.2020**
(21) Application number: 20164099.2
(22) Date of filing: 19.03.2020
(51) Int. Cl.: H04L 9/32

(54) **TRANSPARENT BLOCKCHAIN SIDECHAINS TO SUPPORT BLOCKCHAIN PROCESSING HETEROGENEITY**

(30) Priority: 16.04.2019 US 201916385805
(71) Applicant: Nokia Solutions and Networks Oy, 02610 Espoo (FI)
(72) Inventor: HARI, Adiseshu, Holmdel, NJ New Jersey 07733 (US); KODIALAM, Muralidharan, Marlboro, NJ New Jersey 07746 (US); LAKSHMAN, T., Morganville, NJ New Jersey 07751 (US)
(74) Representative: Nokia EPO representatives

(57) **Abstract**

Various embodiments relate to a method for managing information in a database. The method includes injecting a transaction into a first blockchain and injecting the transaction into a second blockchain, where the first blockchain and the second blockchain are in a same blockchain network. The first blockchain processes the transaction based on a first set of rules and the second blockchain processes the transaction based on a second set of rules different from the first set of rules. The second blockchain is a private blockchain that excludes one or more participants of the first blockchain.

## Description

### TECHNICAL FIELD

This disclosure relates generally to a decentralized database, and more specifically, but not exclusively, to managing information in a blockchain network.

### BACKGROUND

A decentralized database system stores information among a plurality of nodes in a peer-to-peer network. Such a system has attracted much attention because of its ability to provide an enhanced level of protection compared with a centralized database. For example, a decentralized database can offer improvements in tamper resistance and lost-data recovery. For at least these reasons, decentralized database systems have been used for many applications.

One type of decentralized database is a blockchain. A blockchain may be formed from a plurality of blocks that are cryptographically linked together. Each block includes entries, transactions, and/or other information (generally referred to as "assets"), as well as metadata and a reference to the previous block. Hash values may be generated and incorporated into the blocks for all or a portion of these features. As a result, an append-only, sequenced immutable chain of hash-linked blocks is formed for protecting the validity and authenticity of the assets. Blockchains are used to store various types of information, perhaps most notably the Bitcoin cryptocurrency.

In spite of their many advantages, blockchain and other decentralized database systems have a number of drawbacks that adversely affect performance.

### SUMMARY

A brief summary of various example embodiments is presented. Some simplifications and omissions may be made in the following summary, which is intended to highlight and introduce some aspects of the various example embodiments, but not to limit the scope of the invention.

Detailed descriptions of example embodiments adequate to allow those of ordinary skill in the art to make and use the inventive concepts will follow in later sections.

Various embodiments relate to a method for managing information, which method includes injecting a transaction into a first blockchain and injecting the transaction into a second blockchain, where the first blockchain and the second blockchain are in a same blockchain network. The first blockchain processes the transaction based on a first set of rules and the second blockchain processes the transaction based on a second set of rules different from the first set of rules. The second blockchain is a private blockchain that excludes one or more participants of the first blockchain.

The first blockchain may be a parent blockchain, the second blockchain may be a sidechain pegged to the parent blockchain, and the transaction may correspond to an unspent output of an existing transaction in the first blockchain or the second blockchain. The transaction as recorded in the first blockchain and the transaction as recorded in the second blockchain may have a same address.

The first set of rules and the second set of rules may include different confirmation protocols. The first confirmation protocol may be different from the second confirmation protocols in at least one of a transaction ordering protocol, a consensus protocol, or a block processing protocol or structure. The first set of rules may include a first inter-block target spacing, and the second set of rules may include a second inter-block target spacing different from the first inter-block target spacing.

The method may include appending a first block including the transaction to the first blockchain and appending a second block including the transaction to the second blockchain, where differences between the first set of rules and the second set of rules cause the first block in the first blockchain and the second block in the second blockchain to have different block or sequence numbers. The transaction may be injected into the first blockchain and the second blockchain by a same participant of the blockchain network. The participant may correspond to a user, client application, server, node or another entity of the blockchain network.

The transaction may be injected into the first blockchain and the second blockchain at different times. The transaction may be injected into the first blockchain after the transaction is injected into and confirmed in the second blockchain. The transaction may be injected into the first blockchain by an administrator of the second blockchain.

Various other embodiments relate to a system for managing information, wherein the system includes a participant in a blockchain network, a first processor to inject a transaction into a first blockchain, and a second processor to inject the transaction into a second blockchain. The first blockchain and the second blockchain are in the blockchain network. The first blockchain processes the transaction based on a first set of rules, and the second blockchain processes the transaction based on a second set of rules different from the first set of rules. The second blockchain is a private blockchain that excludes one or more participants of the first blockchain.

The first and second processors may be a same processor in or coupled to the participant. The first blockchain may be a parent blockchain, the second blockchain may be a sidechain pegged to the parent blockchain, and the transaction may correspond to an unspent output of an existing transaction in the first blockchain or the second blockchain. The first set of rules and the second set of rules may implement different confirmation protocols or block structures. The first processor may be different from the second processor, and the second processor may inject the transaction in the first blockchain after the transaction is injected and confirmed in the second blockchain.

Various other embodiments relate to a non-transitory machine-readable storage medium encoded with instructions, the instructions to cause at least one of a first processor and a second processor to inject a transaction into a first blockchain and inject the transaction into a second blockchain. The first blockchain and the second blockchain are in a same blockchain network. The first blockchain processes the transaction based on a first set of rules, and the second blockchain processes the transaction based on a second set of rules different from the first set of rules. The second blockchain is a private blockchain that excludes one or more participants of the first blockchain.

The first set of rules and the second set of rules may implement different confirmation protocols or block structures. The instructions may cause the first processor to inject the transaction into the first blockchain and the second blockchain. The instructions may cause the first processor to inject the transaction into the second blockchain and the second processor to inject the transaction into the first blockchain after the transaction has been confirmed in the second blockchain.

### BRIEF DESCRIPTION OF THE DRAWINGS

The accompanying figures, where like reference numerals refer to identical or functionally similar elements throughout the separate views, together with the detailed description below, are incorporated in and form part of the specification, and serve to further illustrate example embodiments of concepts found in the claims and explain various principles and advantages of those embodiments.

These and other more detailed and specific features are more fully disclosed in the following specification, reference being had to the accompanying drawings, in which:
FIG. 1 shows an embodiment of a blockchain network;
FIG. 2 shows an example of a transaction that may be used to transfer asset;
FIG. 3 shows an embodiment for managing information for two blockchains;
FIG. 4 shows an embodiment of a method for managing two blockchains;
FIG. 5 shows an example of different latencies associated with the two blockchains;
FIG. 6 shows another embodiment for managing information for two blockchains;
FIG. 7 shows another embodiment of a method for managing two blockchains; and
FIG. 8 shows an embodiment of a processing system for managing blockchain information.

### DETAILED DESCRIPTION

It should be understood that the figures are merely schematic and are not drawn to scale. It should also be understood that the same reference numerals are used throughout the figures to indicate the same or similar parts.

The descriptions and drawings illustrate the principles of various example embodiments. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor to furthering the art and are to be construed as being without limitation to such specifically recited examples and conditions. Additionally, the term, "or," as used herein, refers to a non-exclusive or (i.e., and/or), unless otherwise indicated (e.g., "or else" or "or in the alternative"). Also, the various embodiments described herein are not necessarily mutually exclusive, as some embodiments can be combined with one or more other embodiments to form new embodiments. Descriptors such as "first," "second," "third," etc., are not meant to limit the order of elements discussed, are used to distinguish one element from the next, and are interchangeable.

One or more embodiments described herein relate to methods, systems, and computer-readable mediums which manage the storage of information so that transactions recorded in one blockchain are transparent to participants in another blockchain in the same network. This is especially beneficial when at least one of the blockchains is a private blockchain and/or when one of the blockchains confirms transactions at a faster rate than the other blockchain. The aforementioned transparency may be achieved even when the blockchains apply different rules for confirming the same transaction. This allows heterogeneity block processing to be performed in a way that improves the efficiency and processing capability of the overall blockchain network.

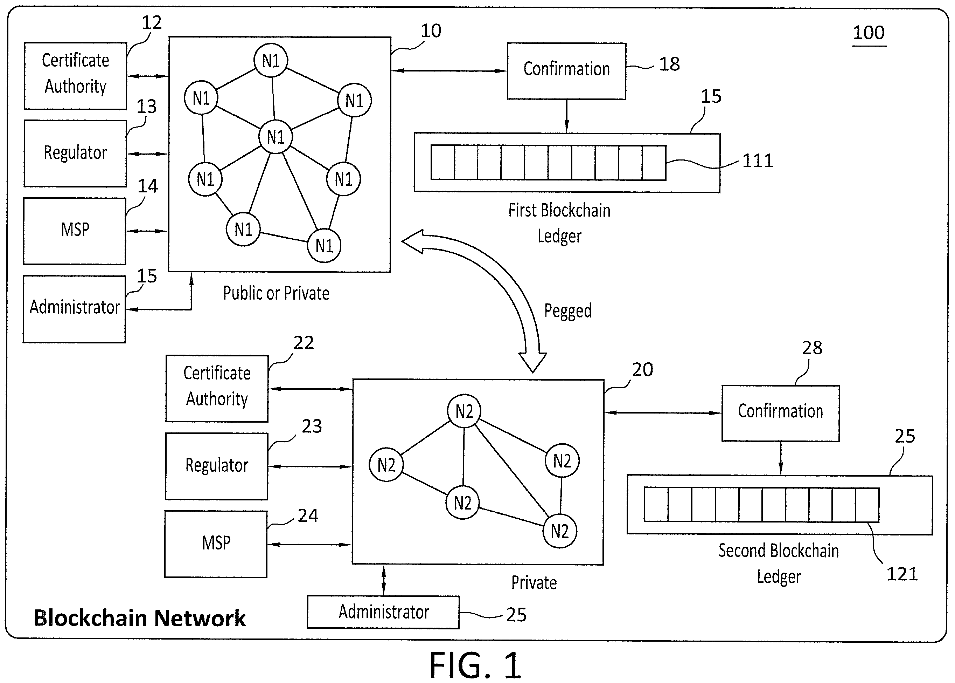

FIG. 1 illustrates an embodiment of a blockchain network 100 which includes a first blockchain subnetwork 10 and a second blockchain subnetwork 20. The blockchain subnetworks may store assets (e.g., data or other information) that may be considered of interest to the participants of the network. In a cryptocurrency implementation, the asset may correspond to a transfer of value between parties, which may or may not be members or participants of the blockchain network. The value may be expressed as a national currency, a digital currency, bitcoin, or another type of value.

The first blockchain subnetwork 10 includes a plurality of nodes N1 connected in a peer-to-peer configuration. The nodes N1 may include peer nodes, ordering service nodes, leader nodes, endorsing nodes, and/or other nodes for performing operations for managing information in relation to a first blockchain 111 of the first blockchain subnetwork 10. The first blockchain 111 may be formed from a plurality of blocks that are cryptographically linked together with hashed values. Each block may include information corresponding to one or more transactions.

The nodes N1 in the first blockchain subnetwork 10 may perform various operations including chaincode invocations, execution of endorsement protocols, verification of key information, digital signatures, and certificates, transaction validation and consensus, and/or event messaging. Each node N1 may communicate with one or more clients (e.g., client applications and/or servers) through corresponding application programming interfaces, and each client may be associated with one or more users. The nodes N1 may communicate with one another using, for example, software development kits (SDKs) or other software tools.

Users in the first blockchain subnetwork 10 may engage in various transactions through their client applications, and the transactions may be submitted as proposals for recordation in the blockchain 111. If the transactions are confirmed (e.g., based on a consensus protocol) 18, blocks including the transactions are generated and appended to the blockchain 111. As shown in FIG. 1, the blockchain 111 is included in a copy of a ledger 15 stored in each node N1. In addition to the blockchain, the ledger 15 may include a state database storing the current world state of the blockchain 111. The state database may be used by the nodes N1 to process queries submitted by users through respective client applications. The operations in the first blockchain subnetwork 10 may be performed based on interactions between the nodes and/or other network entities and one or more of a certificate authority 12, a regulator 13, a membership service provider (MSP) 14, and, optionally, an administrator 15, as well as other entities.

The second blockchain subnetwork 20 includes a plurality of nodes N2 connected in a peer-to-peer configuration. The nodes N2 may include peer nodes, ordering service nodes, leader nodes, endorsing nodes, and/or other nodes for performing operations for managing information in relation to a second blockchain 121 managed in the second blockchain subnetwork 20. Like the first blockchain, the second blockchain 121 may be formed from a plurality of blocks that are cryptographically linked together with hashed values. Each block includes information corresponding to one or more transactions. In one or more embodiments, at least some of the blocks in blockchain 121 may include transactions or other information that is also stored in the first blockchain 111.

Users in the second blockchain subnetwork 20 may initiate transactions through respective client applications, and the transactions may be submitted as proposals for recordation in the second blockchain 121. If the transactions are confirmed (e.g., based on a consensus protocol) 28, blocks including the transactions are generated and appended to the second blockchain 121. As shown in FIG. 1, the blockchain 121 is included in a copy of a ledger 25 stored in each node N2. The ledger 25 may also include a state database storing a world state of the blockchain 121. The state database may be used by the nodes N2 to process queries submitted by users through their respective client applications. The operations in the second blockchain subnetwork 20 may be performed based on interactions between the nodes and one or more of a certificate authority 22, a regulator 23, a membership service provider (MSP) 24, and, optionally, an administrator 25, as well as other entities.

The first blockchain 111 and the second blockchain 121 may be independently managed by the nodes and entities of their respective subnetworks. In some embodiments, the first blockchain and the second blockchain may be related. For example, the first blockchain 111 may be a main or parent blockchain and the second blockchain 121 may be a sidechain pegged to the first blockchain. In this case, participants of the second blockchain 121 may be participants of the first blockchain 111, but not all participants of the second blockchain may be participants of the first blockchain. Such a case may exist, for example, when the blockchains are used to store cryptocurrency applications. However, the embodiments are not intended to cover only cryptocurrency. On the contrary, the blockchain embodiments may store any form of data, transaction, or other information considered of interest, for example, by the users, participants, and members of the blockchain network.

The first blockchain 111 may be pegged to the second blockchain 121 in various ways. In one embodiment, a two-way peg may be formed between the first and second blockchains. When used in the example of a cryptocurrency application, a two-way peg is implemented by providing a lockbox to the first (parent) blockchain 111 and a lockbox to the second blockchain (sidechain) 121. When a transaction occurs, the assets involved in the transaction are logically transferred to an output address which corresponds to the lockbox of the parent blockchain. Once transferred, the assets (currency, bitcoin, or other value) are considered to be locked, which means they are un-spendable or otherwise prohibited from being used in another transaction in the first blockchain subnetwork 10, at least while the asset is in the lockbox. At this point, a mechanism (e.g., software tool) may generate an asset of equivalent value which is input into the sidechain 121, where it is made available for spending.

When the peg is a two-way peg, the transfer process may be reversed using the lockbox of the sidechain 121 to return the assets to the parent blockchain 111. If the transfer between the parent blockchain and the sidechain requires a currency conversion, a mechanism coupled between the blockchain subnetworks may perform a conversion based on an exchange rate prior to inputting the asset into the sidechain. Examples of two-way pegs include but are not limited to a Federated Peg, a symmetric peg (e.g., Simplified Payment Verification (SPV)), and an asymmetric peg.

In other embodiments, the first blockchain 111 and the second blockchain 121 may not have a parent-sidechain relationship. For example, the first blockchain 111 may be any one of a number of public or private blockchains and the second blockchain may be a private (or permissioned) blockchain. In one example, one blockchain may be constituted through an out-of-band mechanism will full access control and knowledge of each participant of the other blockchain. Also, the first and second blockchains may include different users, clients, servers, nodes (e.g., peer nodes, ordering service nodes, etc.), or other participants or entities in the blockchain network, or may share one or more of these participants or entities. Also, the first and second blockchains may have different privacy levels defined, for example, by corresponding privacy policies.

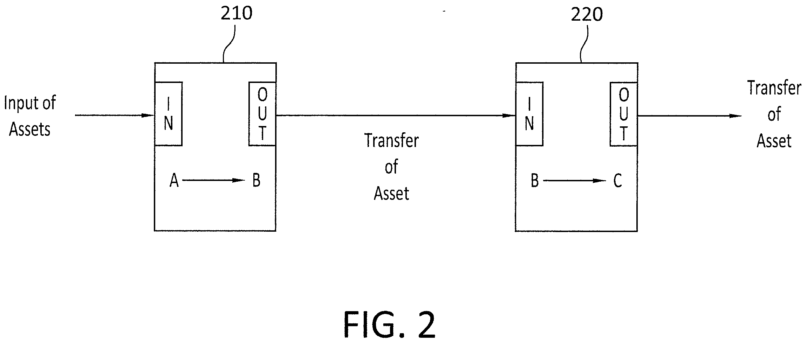

FIG. 2 illustrates an example of a cryptocurrency application of the blockchain network 100 of FIG. 1. This example includes two transactions 210 and 220 that occur in tandem. The first transaction 210 involves a transfer of assets from blockchain participant A to blockchain participant B, and the second transaction 220 involves a transfer of assets from blockchain participant B to blockchain participant C. The blockchain participants are entities of the same blockchain network and may include users, client applications, servers, nodes, or other blockchain entities. The transactions will now be described in greater detail.

Referring to FIG. 2, transaction 210 includes an input that receives information indicative of the transfer of an asset from A to B. The asset may be, for example, an amount of currency, a bitcoin, or some other item of value. In order to verify the transaction 210, a number of operations may be performed. For example, the input information may be encrypted using, for example, a private key for A. This encrypted information may include, for example, a blockchain address for A. The blockchain peer node handling transaction 210 may verify (e.g., with a certificate authority) that private key is authentic.

Once verified, the information may be submitted to a consensus protocol, which involves submitting the transaction to endorsing nodes which verify the digital signature A associated with the transaction. A peer node receiving the transaction may then perform a chaincode invocation to simulate the transaction, after which the transaction is sent to an ordering service node. The ordering service node then sends the transaction, along with other transactions, in a proposed block to other peer nodes. The other nodes perform chaincode invocations based on the transaction, and then read/write sets obtained by all the peer nodes are compared to arrive at consensus for the transaction. Consensus may also involve tracing ownership of the asset back to an original block, for example, in order to confirm that a double-spending situation has no occurred. When consensus is confirmed, the new block recording the transaction from A to B is appended to the blockchain in the ledger and the state database is updated.

Transaction 220 involves a transfer of an asset from B to C. The asset involved in this transaction is the same (or some amount less than the) asset which B received from A in transaction 210. Thus, the input of transaction 220 corresponds to the output of transaction 210. The information output from transaction 210 (e.g., information indicating a transfer of the asset from B to C) may be encrypted, for example, using a public key corresponding to blockchain participant B. The information encrypted using public key B may include, for example, a blockchain address for B.

When the input of transaction 220 receives the asset output from transaction 210, the blockchain peer node handling transaction 220 may verify (e.g., with a certificate authority) that public key B is authentic. Once verified, the information indicating transfer of the asset from B to C may be submitted to a consensus protocol, which may involve the same operations performed to obtain consensus for transaction 210. When confirmed in this manner, a new block recording the transaction from B to C is appended to the blockchain in the ledger and the state database is updated. Additional transactions may be recorded in the blockchain as C transfers the asset to another blockchain participant, and so on.

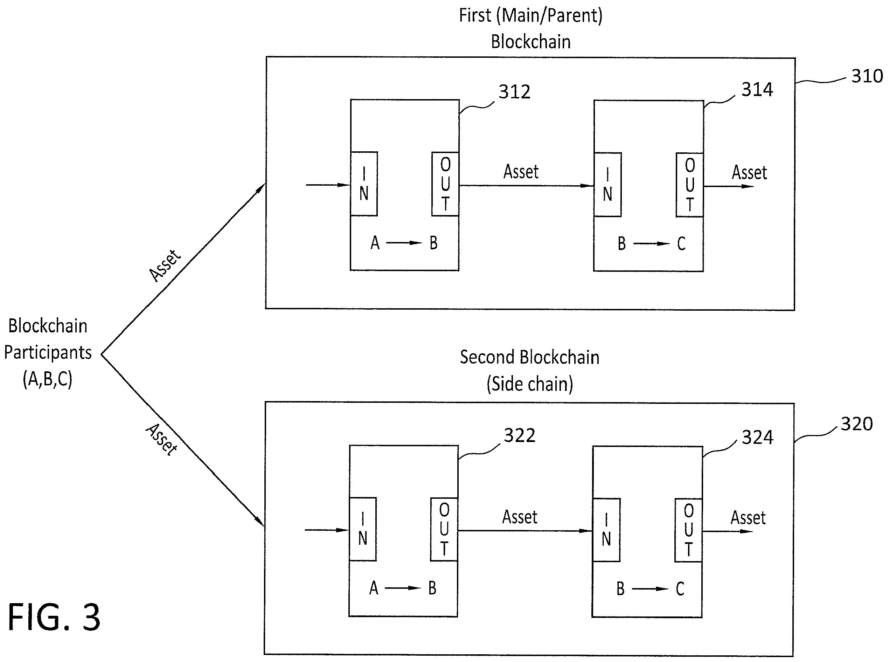

FIG. 3 illustrates an embodiment for recording transactions in the first blockchain 310 and the second blockchain 320 of FIG. 1. The first blockchain 310 may be a main or parent blockchain and the second blockchain may be a sidechain. In another embodiment, neither blockchain may be a sidechain, e.g., both blockchains may be independently managed without being pegged to one another. In a cryptocurrency implementation, each transaction involves the transfer of an asset of value between blockchain participants. In other implementations, the transactions may involve data, records, messages, events, or other types of information unrelated to cryptocurrency or the transfer of value.

Referring to FIG. 3, blockchain participants may inject the same transactions into the first and second blockchains. Each blockchain may record the transactions 312/314 and 322/324, for example, in the manner discussed with respect to FIG. 2. For example, blockchain participant A may inject a transaction 312/322 (indicating the transfer of an asset to blockchain participant B) into both blockchains. Blockchain participant B may inject a transaction 314/324 (indicating the transfer of the same asset to blockchain participant C) into both blockchains. Both blockchains, thus, record the same series of transactions, which may be traced back to respective genesis blocks in the blockchains as part of the process of confirming the transactions and preventing a double-spending condition. Because redundant copies of the same transactions are injected into both blockchains, the transactions in the second blockchain (e.g., the sidechain) 310 are transparent to the blockchain participants of the first blockchain 320, even when the second blockchain is a private (e.g., permissioned) blockchain.

Moreover, the second blockchain may be able to process and record transactions at a faster rate than the main blockchain when, for example, the second blockchain uses rules different from those used for the first blockchain. For example, when the second blockchain has fewer peer nodes than the first blockchain, the confirmation protocol for the second blockchain may be executed faster than in the first blockchain. Recording the same transactions in the first and second blockchains may therefore increase the rate and efficiency of recording transactions in the overall blockchain network. This may also increase block processing heterogeneity in the network.

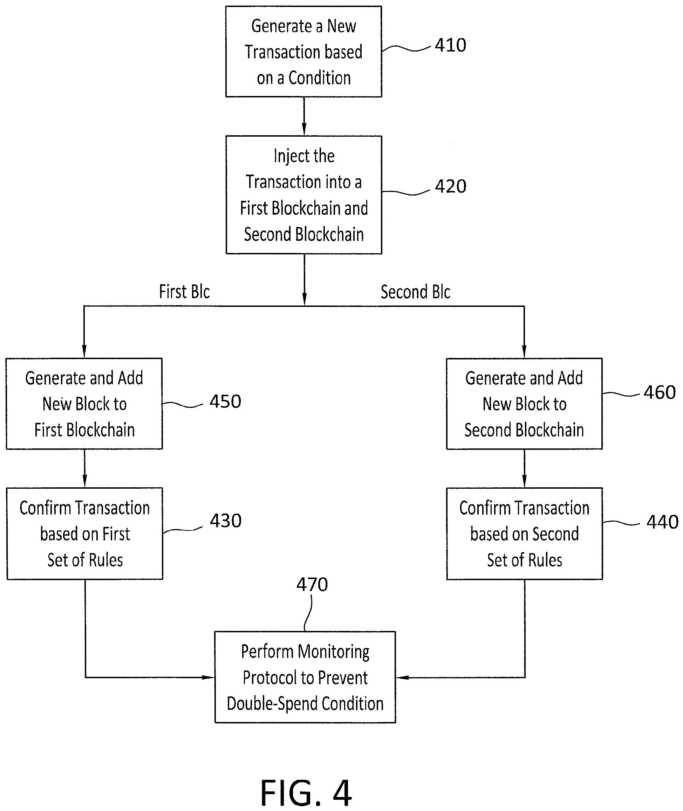

FIG. 4 illustrates an embodiment of a method for managing information in a database system, which, for example, includes the first blockchain and the second blockchain in one or more of the previous embodiments or examples. As previously indicated, in one embodiment, the first blockchain may be a main blockchain and the second blockchain may be a sidechain pegged to the main blockchain. In another embodiment, the first and second blockchains may not be in a main blockchain-sidechain relationship, but rather may be different blockchains in the same network which may or may not be pegged or otherwise connected to one another. The method may be performed, in whole or part, by the blockchain network of FIG. 1, and for a cryptocurrency implementation may include the process flow shown in FIGS. 2 and 3. In another embodiment, the method may be performed by a different blockchain network.

In operation 410, the method includes generating a new transaction by a participant of the blockchain network. The participant may be a user, client application, server, node, administrator, or another network entity. When the participant is node, the transaction may be generated using, for example, a smart contract (chaincode invocation). A set of rules associated with the participant may control how the transaction is generated. For example, a first user may transfer data, value, or other information to a second user in the network. When this occurs, the client application of the first user may automatically generate a transaction detailing the transfer. In a cryptocurrency implementation, the transaction may be generated based on the unspent output (UTXO) of an existing transaction in the first blockchain. Other embodiments may be unrelated to cyptocurrency.

In operation 420, the transaction is injected into the first blockchain and the second blockchain. In accordance with one or more embodiments, a transaction may be considered to be "injected" into a blockchain when it is submitted by the participant for processing and recordation in the blockchain. This may initially involve, for example, submitting the transaction to a peer node, an ordering service node, a leader node, or another type of node. Then, the transaction may be processed based on a set of rules, for example, as described in greater detail herein.

The transaction may be injected into the first blockchain and the second blockchain by the same blockchain participant, e.g., by the client application, server, node, or other network entity that generated the transaction. For example, if a peer node of the first blockchain generated the transaction, then this peer node may submit the transaction to a peer node of the second blockchain through a peer-to-peer connection in the network. The nodes of the first and second blockchains may then independently process and record the transaction in their respective blockchains. The transaction may be injected into the first and second blockchains simultaneously. In this case, the transaction may be processed concurrently by the first and second blockchains. In another embodiment, the transaction may be injected into the first and second blockchains at different times and/or by different network entities.

In one embodiment, the format of the transaction may be the same when injected into the first and second blockchains. This may make processing of the transaction more uniform and efficient, even though the blockchains may use different processing rules for processing the transaction. The same format may refer, for example, to the same predetermined fields for each transaction.

In operation 430, after the consensus protocol is performed and the transaction is confirmed in the first blockchain, a new block including the transaction is appended to the first blockchain and the state database (e.g., world state) of the ledger is updated.

In operation 440, after the consensus protocol is performed and the transaction is confirmed in the second blockchain, a new block including the transaction is appended to the second blockchain and the state database of the ledger is updated. When the protocols for appending the blocks to the first and second blockchains are different in operations 430 and 440, these protocols may be considered to be included in the first and sets of rules used by the blockchains to process the transaction. Thus, through the method of the present embodiment, the same transaction is added to the ledgers of the first blockchain and the second blockchain, even though the processing performed by the first and second blockchains use different sets of rules.

Because of differences in the sets of rules used for the blockchains, a new block containing the transaction may be added to the second blockchain in a sequence/order or at a timing different from that of a new block containing the transaction added to the first blockchain.

In operation 450, the first blockchain may process the transaction using a first set of rules, and at 460, the second blockchain may process the blockchain using a second set of rules different from the first set of rules. The sets of rules may differ in terms of their confirmation protocols, policies, block structures, and/or block processing. For example, in one case, the processing protocols used to confirm the transaction and/or to add a new block to the first blockchain may be different from one or more processing protocols used by the second blockchain to confirm the transaction and/or add a new block. Additionally, or alternatively, the first and second sets of rules may differ in terms of their chaincode invocations, endorsement policies, privacy policies, validation procedures, verification procedures (e.g., involve key and certificate information), consensus protocols, block sizes, transaction or block ordering, grouping rules, inter-block target spacings, and/or other rules. Because the blockchain network includes multiple blockchains that implement different sets of rules, the blockchain network may be considered to be heterogeneous.

In some embodiments, the second blockchain may have a different or more strict privacy policy (e.g., relating to which participants may be notified of or have access to blockchain information) compared to the first blockchain. This may especially be the case when the second blockchain is a private blockchain and the first blockchain is a public blockchain.

The sets of rules for the first blockchain and the second blockchain may also differ in terms of their consensus protocols. For example, the first set of rules for the first blockchain may use a proof-of-work consensus protocol and the second set of rules for the second blockchain may use proof-of-state, proof-of-activity, or another consensus protocol. In another case, the first and second sets of rules may have different inter-block target spacings. For example, the inter-block target spacing for the second blockchain (e.g., sidechain) may be less than the inter-block target spacing for the first blockchain. In this case, the sidechain may have a lower level of latency than the main or parent blockchain relative to transaction confirmation, e.g., the sidechain may be able to more quickly confirm the transaction than the main blockchain.

For a cryptocurrency implementation, the transaction may be injected into the first blockchain and the second blockchain only if a pre-condition is first satisfied. The pre-condition may be that the transaction involves the transfer of an asset involving at least one blockchain participant who is a participant of both blockchains. In one embodiment, all parties or blockchain participants must be participants to both blockchains.

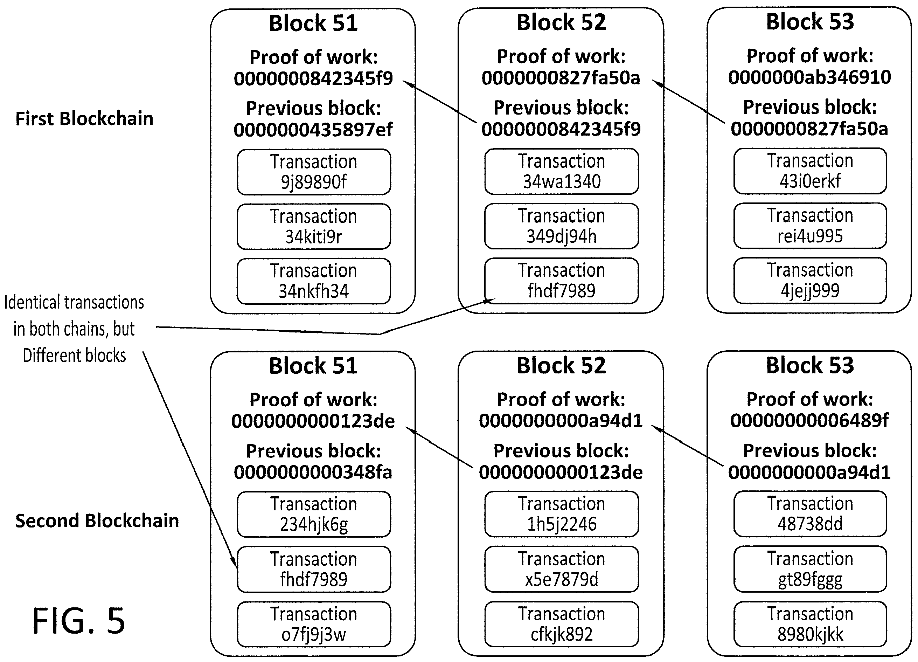

FIG. 5 shows an example of pertinent portions of the first and second blockchains that may be produced by the method of FIG. 4. In this example, each of the first blockchain and the second blockchain includes a sequence of blocks numbered Block 51, Block 52, and Block 53. However, the transaction in the first blockchain is included in a block (Block 52) different from the block (Block 51) that includes the same transaction in the second blockchain. Also, the order of the transaction in Block 52 of the first blockchain is different from the order of the transaction in Block 51 of the second blockchain. This is because, one, the second blockchain (or sidechain) includes fewer transactions than the first (or main) blockchain and, two, as a result the ordering in the transactions in the respective blocks of the first and second blockchains will be different. Regarding the first reason, it is further noted that, in one embodiment, the first blockchain may include transactions or blocks that are not included in the second blockchain. The opposite may also be true, especially in the case where the embodiments do not relate to cryptocurrency.

In the example of FIG. 5, because of latency differences produced by different inter-block target spacings and/or other rules, the block including the transaction in the first blockchain occurs later in time than the block including the transaction in the second blockchain. However, in spite of these differences, the transaction is visible to both blockchains. This transparency exists even when one of the blockchains is a private (e.g., permissioned) blockchain which excludes one or more participants of the other blockchain, which, for example, may be private or public. Also, by injecting the same transaction into both blockchains, heterogeneous block processing may be promoted, which, in turn, may improve the manner in which the computers, processors, and other devices of system work for purposes of managing the blockchain network.

Referring again to FIG. 4, at 470, the blockchain network may implement a monitoring protocol for the first and second blockchains in order to prevent a double-spending condition from occurring relative to the transaction. A double-spending condition may occur, for example, when a sidechain participant injects a transaction with one recipient in the sidechain and injects a transaction with a different recipient in the parent blockchain, potentially after the sidechain transaction is confirmed. In order to address this situation, in one embodiment, the sidechain (which is a private blockchain) may be subject to administrative control.

In this case, all participants may monitor the parent blockchain to ensure that the transactions injected in the parent blockchain are the same as those in the sidechain, and that there are no double-spend transactions. For example, in order for a transaction to be considered valid in the sidechain, it may be confirmed that the same transaction is present in the parent blockchain. If any violations are detected, double-spending sidechain participants may be administratively forced to rescind these transactions. The monitoring operation may also involve tracing ownership of the asset in one or both blockchains back to an original or genesis block. The monitoring protocol may be performed, in whole or part, by the participants of the first and second blockchains.

Also, in one embodiment, the sidechain may validate transactions by not checking on its own genesis block, but by checking on the genesis block of the parent blockchain. This is possible, for example, because the transaction injected into both blockchains may have the same logical format with the same fields, and therefore may be validated using the same transaction validity protocol.

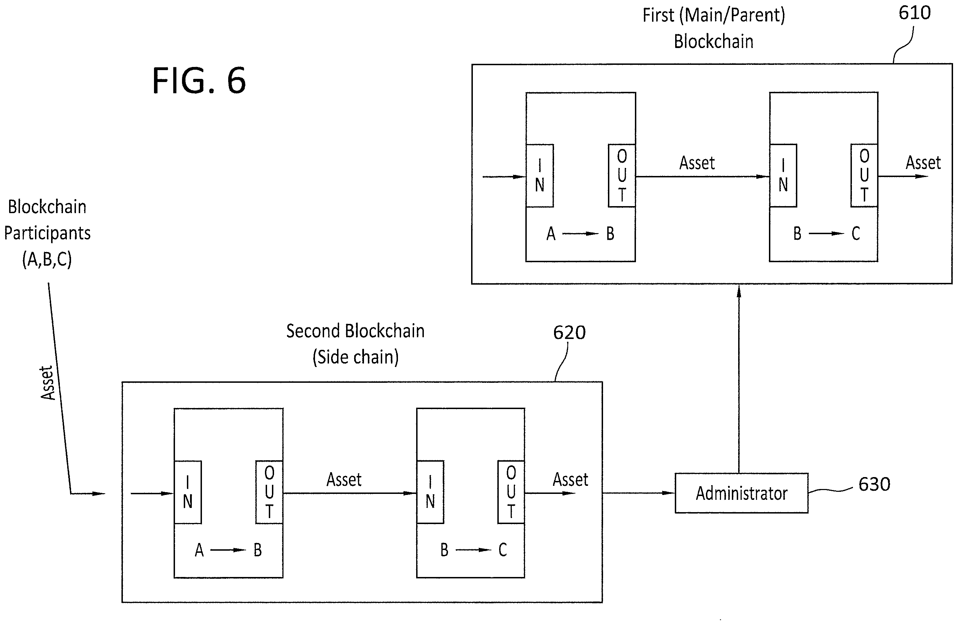

FIG. 6 illustrates another embodiment for processing and recording transactions in a first blockchain 610 and a second blockchain 620, which may correspond to the first and second blockchains in FIG. 1, respectively. In this embodiment, blockchain participants (A, B, C) inject transactions into the second blockchain 620 but not the first blockchain 610. Instead, the transactions are injected into the first blockchain 610 at a later time by an administrator 630 of the second blockchain, and only after the transactions have been validated and confirmed in the second blockchain. This may prevent the occurrence of a double-spending anomaly, while at the same time increase the efficiency of block processing in a heterogenous network of different blockchains. This method may also improve transparency of the transactions recorded in both blockchains, and this is especially the case when the first blockchain is a public blockchain and the second blockchain is a private blockchain. In another embodiment, both blockchains may be private.

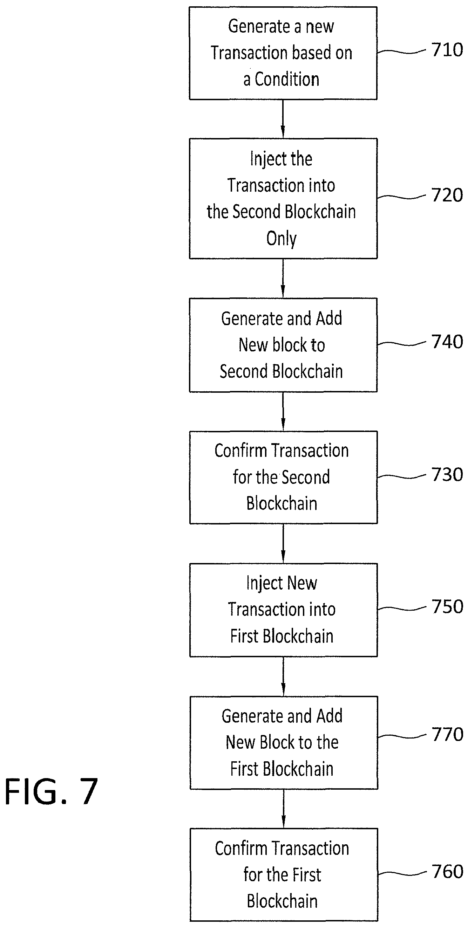

FIG. 7 a method for managing information in a database system, which, for example, includes the first blockchain 610 and the second blockchain 620. When applied to a cryptocurrency implementation, the method may relate to the embodiment of FIG. 6. However, the method of FIG. 7 is not so limited, e.g., this method may be applied to many implementations that do not involve cryptocurrency. As with previous embodiments, the first blockchain may be a main blockchain and the second blockchain may be a sidechain pegged to the main blockchain. In another embodiment, the first and second blockchains may not be in a main blockchain-sidechain relationship, e.g., may be unpegged blockchains operating independently.

In operation 710, the method includes generating a new transaction by a blockchain participant. This operation may be performed, for example, in the same manner described for operation 410. The blockchain participants may be a user, client application, server, node, administrator, or other network entity running software or a smart contract for controlling generation of the transaction.

For a cryptocurrency implementation, the new transaction may be generated based on the unspent output (UTXO) of an existing transaction in the first blockchain or the second blockchain (e.g., main blockchain or sidechain). This is different from operation 410, where the new transaction is generated based on the unspent output of an existing transaction in the first blockchain. In one embodiment, the first blockchain may be a public or private blockchain and the second blockchain may be a private blockchain.

In operation 720, the transaction is injected into the second blockchain, but not in the first blockchain. The transaction may be injected by the same blockchain participant that generated the transaction, or the transaction may be injected by another network entity coupled to the blockchain participant that generated the transaction. For example, if a client application of the first blockchain or second blockchain generated the new transaction, then the client application may inject the transaction into the second blockchain 620 only, through a corresponding peer node. If the client application is associated with the first blockchain, then the client application may inject the transaction into the second blockchain 620 through respective peer nodes of the blockchains.

In operation 730, a new block including the transaction is generated and added to the second blockchain and the ledger is updated. As in previous embodiments, the process of generating and adding the new block to the second blockchain may be performed based on policies and/or protocols considered part of the set of rules used to process transactions in the second blockchain. In one embodiment, operation 730 may be performed in the same manner as operation 430.

In operation 740, the transaction is processed based on the second set of rules of the second blockchain. This processing may be performed in a manner similar to the processing performed in the embodiment of FIG. 4 for purposes of confirmation. For example, the second set of rules may govern processing protocols that involve one or more of chaincode invocation, endorsement, public/private key verification, ordering, privacy and/or other policies, and consensus (e.g., based on a comparison of read/write sets among peer nodes and/or by proving the transaction back through the blockchain to a genesis block).

In operation 750, the transaction may be injected into the first blockchain 610 by administrator 630. For a cryptocurrency implementation, the transaction may not be injected into the first blockchain unless a pre-condition is first satisfied. The pre-condition may be that the transaction involves the transfer of an asset between at least one blockchain participant who is also participant of the first blockchain. Otherwise, the transaction may not be injected for recordation in the first blockchain. The timing for injecting transactions to the first blockchain 610 may be before, concurrently with, or after the new block containing the transaction is appended to the second blockchain 620.

The administrator 630 may be a node, manager, or another network entity which has been given permission by the blockchain network to submit transactions from the second blockchain to the first blockchain. In one embodiment, the administrator 630 may receive all transactions which have been confirmed in the second blockchain and perform a filtering process to determine whether the pre-condition is satisfied. If the first blockchain 610 is a main or parent blockchain and the second blockchain is a sidechain, then this pre-condition may not be applicable because all blockchain participants of the sidechain may be participants of the main blockchain. (Of course, the opposite may not be true in some embodiments). In one embodiment, the pre-condition may be that all blockchain participants of a transaction are registered in both blockchains.

In one embodiment, the administrator 630 may transmit the new transaction to a predetermined peer node of the first blockchain determined in accordance with a rule or policy. For example, the administrator may execute a smart contract or policy that determines which peer node of the first blockchain is to receive the transaction. In one embodiment, the smart contract may indicate that the same node of the first blockchain is to receive all transactions from the second blockchain. In another embodiment, the smart contract may indicate that different nodes of the first blockchain are to receive transactions from the second blockchain, for example, based on different conditions, e.g., the specific parties involved in the transactions, the amount of the transactions, the nature, type, and/or form of the transactions, the type of data or information to be stored, etc.

In operation 760, after the transaction is confirmed, a new block including the transaction is appended to the first blockchain 610 and the state database of the ledger is updated. Thus, through the method of the present embodiment, the same transaction is added to the ledgers of both blockchain. This makes transactions recorded in the second blockchain transparent to members and entities of the first blockchain, even when the second blockchain is a private (e.g., permissioned) blockchain that excludes one or more participants of the first blockchain. This method also improves heterogeneity in the blockchain network realized by the use of different sets of rules for processing transactions in by the first and second blockchains. Also, because the new transaction is submitted to the first blockchain after confirmation of this transaction in the second blockchain, the blocks including the transaction in the first and second blockchains will be out of sequence.

In operation 770, the transaction injected from the administrator 630 of the second blockchain 620 is confirmed among the peer nodes in the first blockchain 610. The new transaction may be confirmed based on the set of rules for the first blockchain 610. The set of rules for the first blockchain 610 may be different from the set of rules for the second blockchain 620, for example, as described in relation to other embodiments. Like the other embodiments, the present embodiment may provide transparency and heterogeneity with respect to the first and second blockchains.

In one embodiment, the format of the transaction injected into the first blockchain may be the same as the format of the transaction injected into the second blockchain. The same format may refer, for example, to the same predetermined fields for each transaction.

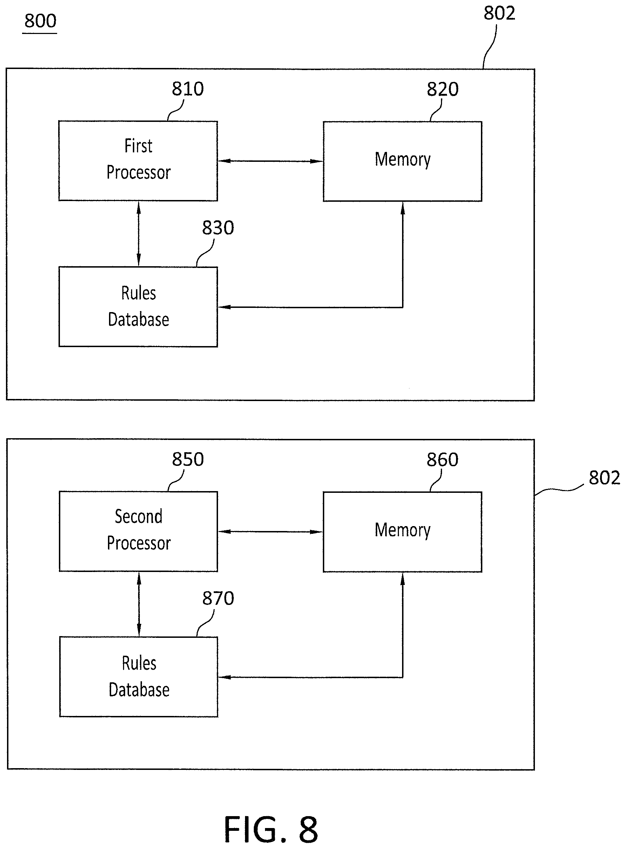

FIG. 8 shows an embodiment of a processing system 800 which includes at least one blockchain participant 801. The blockchain participant 801 may correspond to client applications, nodes, or other network entities of the aforementioned embodiments.

The blockchain participant 801 includes a processor 810, a memory 820, and a rules database 830. The processor 810 may execute operations for injecting transactions, processing transactions, adding new blocks, monitoring double-spend anomalies, and/or performing other operations as described herein.

The memory 820 may be a non-transitory computer-readable medium for storing instructions, applications, smart contracts, and/or other software to be executed by the processor 810 for performing the operations of the embodiments described herein. The computer-readable medium may be a volatile or non-volatile memory or other storage device, which may be removably or fixedly coupled to the computer, processor, controller, or other signal processing device which is to execute the code or instructions for performing the method embodiments described herein.

The rules database 830 may store the set of rules to be used to perform operations related to a corresponding blockchain. As previously described, the rules may define a set of protocols, policies, or other information for controlling the processor to perform the operations of the embodiments described herein.

For the embodiments of FIGS. 6 and 7, the processing system 800 may also include another blockchain participant 802. The blockchain participant 802 may correspond to client applications, nodes, administrators, or other network entities of the aforementioned embodiments. In one case, blockchain participant 802 may have a same configuration as the blockchain participant 801, e.g., may include a second processor 850, a memory 860, and a rules database 870. However, the rules database 870 may store rules different from the rules stored in rules database 830 and the memory 860 may store instructions, applications, smart contracts, and/or other software different from those stored in memory 820.

In one embodiment, blockchain participant 801 may process a transaction injected into the first blockchain based on a first set of rules stored in database 830, and blockchain participant 802 may process the same transaction injected into the second blockchain based on a second set of rules, as discussed in relation to embodiments described herein. In another embodiment, blockchain participant 802 may inject a transaction into the second blockchain 620 and blockchain participant 801 may inject the transaction into the first blockchain 610. In this latter case, blockchain participant may correspond, for example, to administrator 630 in FIG. 6.

Blockchains have been developed to protect various types of information, including but not limited to cryptocurrency. In some networks, sidechains have been developed to support network participants. However, when the sidechain is private (or permissioned), the transactions in the sidechain are not transparent to participants of another blockchain that may be in the network. Moreover, when the side chain and the other blockchain operate based on different rules, a heterogeneity problem arises with respect to block processing.

One or more embodiments described herein solve these technical problems by making the transactions on a sidechain transparent to participants of another blockchain in the same network. This may be accomplished by recording the sidechain transactions in the blockchain. This approach also improves block processing heterogeneity, which, in turn, may improve the operation of the computer systems in network, at least when it comes to information management. Use of a sidechain may also make confirmed transactions available for use by participants of the blockchain. This may be especially beneficial, for example, when the sidechain is used in connection with a bank. In this scenario, the bank transactions may also end up being recorded in the (parent) blockchain.

It should be apparent from the foregoing description that various exemplary embodiments of the invention may be implemented in hardware. Furthermore, various exemplary embodiments may be implemented as instructions stored on a non-transitory machine-readable storage medium, such as a volatile or non-volatile memory, which may be read and executed by at least one processor to perform the operations described in detail herein. A non-transitory machine-readable storage medium may include any mechanism for storing information in a form readable by a machine, such as a personal or laptop computer, a server, or other computing device. Thus, a non-transitory machine-readable storage medium may include read-only memory (ROM), random-access memory (RAM), magnetic disk storage media, optical storage media, flash-memory devices, and similar storage media and excludes transitory signals.

It should be appreciated by those skilled in the art that any blocks and block diagrams herein represent conceptual views of illustrative circuitry embodying the principles of the invention. Implementation of particular blocks can vary while they can be implemented in the hardware or software domain without limiting the scope of the invention. Similarly, it will be appreciated that any flow charts, flow diagrams, state transition diagrams, pseudo code, and the like represent various processes which may be substantially represented in machine readable media and so executed by a computer or processor, whether or not such computer or processor is explicitly shown.

Accordingly, it is to be understood that the above description is intended to be illustrative and not restrictive. Many embodiments and applications other than the examples provided would be apparent upon reading the above description. The scope should be determined, not with reference to the above description or Abstract below, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

Additionally, it is noted that the methods, processes, and/or operations described herein may be performed by code or instructions to be executed by a computer, processor, controller, or other signal processing device. The code or instructions may be stored in the non-transitory computer-readable medium as previously described in accordance with one or more embodiments. Because the algorithms that form the basis of the methods (or operations of the computer, processor, controller, or other signal processing device) are described in detail, the code or instructions for implementing the operations of the method embodiments may transform the computer, processor, controller, or other signal processing device into a special-purpose processor for performing the methods herein.

The processors, managers, smart contracts, chaincode, or other processing features of the embodiments disclosed herein may be implemented in logic which, for example, may include hardware, software, or both. When implemented at least partially in hardware, the processors, managers, smart contracts, chaincode, or other processing features may be, for example, any one of a variety of integrated circuits including but not limited to an application-specific integrated circuit, a field-programmable gate array, a combination of logic gates, a system-on-chip, a microprocessor, or another type of processing or control circuit.

When implemented in at least partially in software, the processors, managers, smart contracts, chaincode, or other processing features may include, for example, a memory or other storage device for storing code or instructions to be executed, for example, by a computer, processor, microprocessor, controller, or other signal processing device. The computer, processor, microprocessor, controller, or other signal processing device may be those described herein or one in addition to the elements described herein. Because the algorithms that form the basis of the methods (or operations of the computer, processor, microprocessor, controller, or other signal processing device) are described in detail, the code or instructions for implementing the operations of the method embodiments may transform the computer, processor, controller, or other signal processing device into a special-purpose processor for performing the methods described herein. The term "device unit data" may be or include card unique data or other type of unique device-specific data.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A method for managing information, comprising:
injecting a transaction into a first blockchain; and
injecting the transaction into a second blockchain,
wherein the first blockchain and the second blockchain are in a same blockchain network, the first blockchain processing the transaction based on a first set of rules and the second blockchain processing the transaction based on a second set of rules different from the first set of rules, and wherein the second blockchain is a private blockchain that excludes one or more participants of the first blockchain.

2. The method of claim 1, wherein:
the first blockchain is a parent blockchain,
the second blockchain is a sidechain pegged to the parent blockchain, and
the transaction corresponds to an unspent output of an existing transaction in the first blockchain or the second blockchain.

3. The method of claim 2, wherein the transaction as recorded in the first blockchain and the transaction as recorded in the second blockchain have a same address.

4. The method of any of claims 1 to 3, wherein the first set of rules and the second set of rules include different confirmation protocols.

5. The method of claim 4, wherein the first confirmation protocol is different from the second confirmation protocols in at least one of a transaction ordering protocol, a consensus protocol, or a block processing protocol or structure.

6. The method of any of claims 1 to 5, wherein:
the first set of rules includes a first inter-block target spacing, and
the second set of rules includes a second inter-block target spacing different from the first inter-block target spacing.

7. The method of any of claims 1 to 6, further comprising:
appending a first block including the transaction to the first blockchain, and
appending a second block including the transaction to the second blockchain,
wherein differences between the first set of rules and the second set of rules cause the first block in the first blockchain and the second block in the second blockchain to have different block or sequence numbers.

8. The method of any of claims 1 to 7, wherein the transaction is injected into the first blockchain and the second blockchain by a same participant of the blockchain network, the participant corresponding to a user, client application, server, node or another entity of the blockchain network.

9. The method of any of claims 1 to 8, wherein the transaction is injected into the first blockchain and the second blockchain at different times.

10. The method of claim 9, wherein the transaction is injected into the first blockchain after the transaction is injected into and confirmed in the second blockchain.

11. The method of claim 10, wherein the transaction is injected into the first blockchain by an administrator of the second blockchain.

12. A system for managing information, comprising:
a participant in a blockchain network;
a first processor to inject a transaction into a first blockchain;
a second processor to inject the transaction into a second blockchain,
wherein the first blockchain and the second blockchain are in the blockchain network, the first blockchain to process the transaction based on a first set of rules and the second blockchain to process the transaction based on a second set of rules different from the first set of rules, and wherein the second blockchain is a private blockchain that excludes one or more participants of the first blockchain.

13. The system of claim 12, wherein the first processor and the second processor are a same processor included in or coupled to the participant.

14. The system of any of claims 12 to 13, wherein:
the first blockchain is a parent blockchain,
the second blockchain is a sidechain pegged to the parent blockchain, and
the transaction corresponds to an unspent output of an existing transaction in the first blockchain or the second blockchain.

15. The system of any of claims 12 to 14, wherein the first set of rules and the second set of rules implement a different confirmation protocol or block structure.

16. The system of any of claims 12 to 15, wherein:
the first processor is different from the second processor, and
the second processor is to inject the transaction into the first blockchain after the transaction is injected into and confirmed in the second blockchain.

17. A non-transitory machine-readable storage medium encoded with instructions, the instructions to cause at least one of a first processor and a second processor to:
inject a transaction into a first blockchain; and
inject the transaction into a second blockchain,
wherein the first blockchain and the second blockchain are in a same blockchain network, the first blockchain processing the transaction based on a first set of rules and the second blockchain processing the transaction based on a second set of rules different from the first set of rules, and wherein the second blockchain is a private blockchain that excludes one or more participants of the first blockchain.

18. The storage medium of claim 17, wherein the first set of rules and the second set of rules implement a different confirmation protocol or block structure.

19. The storage medium of any of claims 17 to 18, the instructions are to cause the first processor to inject the transaction into the first blockchain and the second blockchain.

20. The storage medium of any of claims 17 to 19, wherein the instructions are to cause:
the first processor to inject the transaction into the second blockchain, and
the second processor to inject the transaction into the first blockchain after the transaction has been confirmed in the second blockchain.
